# EUROPÄISCHE PATENTANMELDUNG

(11) **EP 4 700 686 A1**
(43) Veröffentlichungstag der Anmeldung: **25.02.2026**
(21) Anmeldenummer: 25196571.1
(22) Anmeldetag: 19.08.2025
(51) Int. Cl.: G06Q 30/0201, G06Q 30/0283, G06Q 50/40

(54) **VERFAHREN ZUR ERMITTLUNG DER VERTEILUNG DER RAUMAUFGELÖSTEN NUTZUNG VON VERKEHRSMITTELN EINER AUS EINER VIELZAHL AN INDIVIDUEN BESTEHENDEN PERSONENMENGE IN EINEM ERMITTLUNGSZEITRAUM SOWIE EIN DAS VERFAHREN AUSFÜHRENDES SYSTEM**

(30) Priorität: 19.08.2024 DE 102024123629; 19.08.2024 EP 24195225
(71) Anmelder: pwp - systems GmbH, 65520 Bad Camberg (DE); Zimmer, Christoph, 56179 Vallendar (DE); Geppert, Bernd, 64342 Seeheim-Jugenheim (DE); HighQ Computerlösungen GmbH, 79100 Freiburg im Breisgau (DE)
(72) Erfinder: DISCH, Christian, 79283 Bollschweil (DE); GEPPERT, Bernd, 64342 Seeheim-Jugenheim (DE); HORNIG, Thomas, 22453 Hamburg (DE); PFISTER, Jörg, 65520 Bad Camberg (DE); PLANK-WIEDENBECK, Uwe, 99423 Weimar (DE); ZIMMER, Christoph, 56179 Vallendar (DE)
(74) Vertreter: Haverkamp Patentanwälte PartG mbB

(57) **Zusammenfassung**

Die Erfindung betrifft ein Verfahren zur Ermittlung der Verteilung der raumaufgelösten Nutzung von Verkehrsmitteln einer aus einer Vielzahl an Individuen bestehenden Personenmenge in einem Ermittlungszeitraum, umfassend die folgenden Schritte:
- Mehrmaliges und über den Ermittlungszeitraum verteiltes, automatisiertes zentrales Abfragen der sensorbasierten verkehrsmittelaufgelösten Streckennutzung für einen bestimmten Subermittlungszeitraum von Individuen einer bestimmten Subpersonenmenge, wobei die Subpersonenmenge als Teilmenge aus zufällig ausgewählten Individuen der Personenmenge gebildet wird und welcher Subermittlungszeitraum ein Bruchteil des Ermittlungszeitraums ist,
- Speichern der zentral abgefragten, verkehrsmittelaufgelösten Streckennutzung,
- Hochrechnen der wahrscheinlichen verkehrsmittelaufgelösten Streckennutzung der Personenmenge auf Basis der gespeicherten verkehrsmittelaufgelösten Streckennutzung für den gesamten Ermittlungszeitraum;
- Ausgabe einer verkehrsmittel- und streckenaufgelösten Einheit entsprechend der hochgerechneten personenmengenbezogenen Nutzung der Verkehrsmittel.

## Beschreibung

Die Erfindung betrifft ein Verfahren zur Ermittlung der Verteilung der raumaufgelösten Nutzung von Verkehrsmitteln einer aus einer Vielzahl an Individuen bestehenden Personenmenge in einem Ermittlungszeitraum. Die Erfindung betrifft des Weiteren ein das Verfahren durchführendes System.

Unter einem Verkehrsmittel in dem vorliegenden Verfahren versteht man sämtliche Fortbewegungsmittel, mit denen insbesondere Personen befördert werden können. Bei einem Verkehrsmittel im vorliegenden Verfahren kann es sich um ein spezifisches Fortbewegungsmittel (etwa ein bestimmter Bus mit einer eindeutigen Kennung), um eine Linie (etwa eine Buslinie), um eine ganze Fortbewegungsmittelart (etwa alle Busse) oder auch um eine bestimmte Gruppe von Fortbewegungsmittelarten (etwa alle Fortbewegungsmittel in einem bestimmten regionalen Bereich) handeln.

Insbesondere handelt es sich bei der Menge der betrachteten Verkehrsmittel im Rahmen dieses Verfahren um einen Teil oder eine Gesamtheit mehrerer Fortbewegungsmittelarten, deren Beförderungsangebot identisch ist oder sich ergänzt, etwa sämtliche Fortbewegungsmittel, die dem öffentlichen Personennahverkehr (ÖPNV) zuzuordnen sind, oder auch des gesamten öffentlichen Personenverkehrs (Nahverkehr und Fernverkehr). Auch die Nutzung von räumlich begrenzten Fortbewegungsmitteln wie E-Scooter oder dergleichen können als Verkehrsmittel gemäß dem vorliegenden Verfahren in Alleinstellung oder auch als Ergänzung angesehen werden.

Es gibt wirtschaftliche Ansätze, die Nutzung von Verkehrsmitteln, insbesondere öffentlichen Verkehrsmitteln, nicht nutzerspezifisch individuell abzurechnen, sondern Pauschalangebote anzubieten. Solche Pauschalangebote sind in vielen Fällen verkehrsmittel- und/oder regionsübergreifend. So haben sich Busbetreiber etwa mit Straßenbahn- und Zugbetreibern in einem Tarifverbund zusammengeschlossen. Neben dieser verkehrsmittelaufgelösten Betrachtungsweise (etwa Bus, Straßenbahn, U-Bahn) haben sich auch regional verteilte Anbieter zu einem Tarifverbund zusammengeschlossen, etwa stadtübergreifend. Insbesondere eine solche regionale Zusammenarbeit bedeutet, dass eine Vielzahl an Betreibern in einem Tarifverbund miteinander kooperieren müssen, wenngleich sie gegenüber einem Nutzer des Tarifverbundes einheitlich mit einem pauschalen Festpreis agieren.

Es ist durchaus üblich, dass nicht alle Verkehrsmittel in gleichem Maße durch Nutzer eines Tarifverbundes genutzt werden. Üblicherweise ist jedoch eine Vergütung der einzelnen Betreiber von der beförderten Personenmenge abhängig. Es steht vor diesem Hintergrund die Frage zu beantworten, wie der innerhalb des Tarifverbundes erwirtschaftete Gesamterlös auf die einzelnen Betreiber und Verkehrsmittel aufgeteilt werden soll.

US 2020/0020232 A1 betrifft ein Verfahren zum Ermitteln der Nutzung von bestimmten Streckenabschnitten durch Teilnehmer des öffentlichen Nahverkehrs. Hierzu werden Mobildaten ausgewertet und zwar dahingehend, an welcher Haltestelle eine Person eingestiegen und an welcher diese ausgestiegen ist, um eine Auslastung der einzelnen Routen zu ermitteln und Verbesserungen vorschlagen zu können.

Auf Wikipedia (abgerufen für den 15. August 2024) werden verschiedene eindimensionale Samplingmethoden diskutiert und Grundlagen hierzu aufgezeigt.

Aufgabe der Erfindung ist es, ein Verfahren sowie ein System bereitzustellen, mit dem die Verteilung der Nutzung von verschiedenen Verkehrsmitteln durch eine Nutzermenge streckenaufgelöst bestimmbar ist.

Gelöst wird der verfahrensbezogene Anteil der Aufgabe durch ein eingangs beschriebenes, gattungsgemäßes Verfahren mit den Merkmalen des Anspruchs 1; der systembezogene Anteil der Aufgabe wird durch ein System gemäß des Anspruchs 16 gelöst.

Vorteilhafte Ausgestaltungen ergeben sich aus der Beschreibung sowie den abhängigen Ansprüchen.

Das Verfahren geht in einem ersten Schritt von einer verkehrsmittelnutzenden Personenmenge aus, für die die Nutzung bestimmt werden soll. Diese Personenmenge besteht aus einer Vielzahl an einzelnen Individuen. Ziel ist die Ermittlung der Nutzung der Verkehrsmittel durch die Personenmenge in einem Ermittlungszeitraum. Ein solcher Ermittlungszeitraum kann etwa ein Zeitraum von einem Jahr sein.

Um dies zu erreichen, wird einerseits auf die verkehrsmittelaufgelöste Streckennutzung der Individuen zurückgegriffen. Bei der verkehrsmittelaufgelösten Streckennutzung handelt es sich um eine Aussage darüber, welche Strecke ein einzelnes Individuum zurückgelegt und welches Verkehrsmittel es dabei genutzt hat.

Bezüglich der Streckennutzung reicht es raumaufgelöst in vielen Fällen aus, den Weg nur bezüglich bestimmter, vordefinierter Orte zu bestimmen, etwa die Nutzung eines Verkehrsmittels zwischen zwei bekannten Haltestellen, Ausfahrten oder dergleichen. Diese haben üblicherweise zwar größere Abstände untereinander, sind aber selbst bei geringer Raumauflösung differenzierbar. In einigen Fällen kann es ausreichen, festzustellen, an welchem Ort, etwa einer Haltestelle, ein Individuum begonnen hat, ein Verkehrsmittel zu nutzen, das bedeutet: Wo es eingestiegen ist, und zusätzlich zu bestimmen, welche Distanz anschließend in dem Verkehrsmittel zurückgelegt wurde (letzteres wird im deutschen Sprachgebrauch auch als "Personenkilometer" angesprochen). Auch ein solches Informationspaar wird unter dem Begriff "Streckennutzung" verstanden.

Um die Nutzung einer Strecke zu ermitteln, wird üblicherweise auf Weg-Zeit-Daten zurückgegriffen. Weg-Zeit-Daten zeichnen sich durch die Paarung eines geografischen Ortes und eines Zeitstempels aus. Mit solchen Weg-Zeit-Daten kann eine besonders einfache Auswertung erfolgen, da die zurückgelegte Strecke einfach Differenzbildung ermittelt werden kann. Ferner können aus diesen Weg-Zeit-Daten Geschwindigkeiten und Beschleunigungen abgeleitet werden, die in die Ermittlung, welches Verkehrsmittel genutzt wurde, zumindest mit einfließen können.

So kann vorgesehen sein, dass die Ermittlung der genutzten Strecke für ein Individuum mittels durch das mobile Endgerät bereitgestellten, dem Individuum zugeordneten Bewegungsdaten aus dem Subermittlungszeitraum erfolgt.

Von der genutzten Strecke ist die Frage zu trennen, welches Verkehrsmittel genutzt wurde. In einigen Fällen verlaufen verschiedene Verkehrsmittel auf gleichen oder nahezu parallelen Routen, sodass die Ermittlung des genutzten Verkehrsmittels eine besondere Herausforderung darstellen kann.

Mit ausgewertet werden auch Null-Werte, also: keine Strecke ist zurückgelegt worden oder es ist kein Verkehrsmittel genutzt worden. Damit ist auch eine Nicht-Nutzung mit abgebildet.

Andererseits ist es Kern der Erfindung, dass während des Ermittlungszeitraumes mehrmals automatisiert die verkehrsmittelaufgelöste Streckennutzung für einen Subermittlungszeitraum - also nur einen Ausschnitt aus dem gesamten Ermittlungszeitraum - von Individuen einer bestimmten Subpersonenmenge - somit nur einen Ausschnitt der gesamten Personenmenge - zentral abgefragt wird. Auf Basis der Subpersonenmenge wird durch Hochrechnung im Hochrechnungsschritt die tatsächliche streckenaufgelöste Nutzung der Verkehrsmittel durch die gesamte Personenmenge stochastisch abgeschätzt.

Der genannte Subermittlungszeitraum ist eine Abgrenzung zu einer manuellen stichprobenartigen Befragung (mit Zählpersonal), die eine gesicherte Antwort lediglich für einen bestimmten Zeitpunkt, nämlich den manuellen Abfragezeitpunkt, bietet. Ein solcher Subermittlungszeitraum umfasst üblicherweise etwa 24 Stunden oder wenige Tage, etwa eine Woche. Es ist also davon auszugehen, dass der Subermittlungszeitraum etwa 0,1 % bis 1 % des Ermittlungszeitraums darstellt. Durch das automatisierte Abfragen der verkehrsmittelaufgelösten Streckennutzung für den gesamten Subermittlungszeitraum wird somit ein eine Zeitspanne umfassendes, präzises Bild von der verkehrsmittelaufgelösten Streckennutzung des Individuums erhalten.

Die genannte Subpersonenmenge kann etwa 1 % bis 10 % der Personenmenge darstellen, bevorzugt etwa 2 % bis 7 %. Über den zeitlichen Verlauf des Verfahrens, insbesondere über mehrere Ermittlungszeiträume kann die Anzahl der Individuen in der Subpersonenmenge auch angepasst werden: Während in einer Anlaufphase grundsätzlich die verkehrsmittelaufgelöste Streckennutzung von einer größeren Anzahl an Individuen abgefragt werden kann, um eine gesicherte Aussage zu erhalten, so ist zu einem späteren Zeitpunkt, in dem lediglich eine Bestätigung der vorangegangenen Erkenntnisse notwendig ist, der Anteil der Subpersonenmenge an der Personenmenge herabsenkbar.

Die Subpersonenmenge wird zufällig aus den der Personenmenge zugeordneten Individuen ausgewählt. Die Grundlage für die Auswahl der Individuen aus der Personenmenge ist grundsätzlich eine bestimmte Anzahl an Individuen pro Subermittlungszeitraum.

Ist der Ermittlungszeitraum ein Jahr, kann vorgesehen sein, statistisch jedes Individuum etwa zwölf Mal, nämlich ein Mal pro Monat, abzufragen. In einer anderen Ausgestaltung kann vorgesehen sein, statistisch jedes Individuum 14 Mal pro Jahr abzufragen, somit zwei Mal im Jahr pro Wochentag. Hierbei ist nicht davon auszugehen, dass überwacht wird, dass jedes Individuum exakt mit der vorgegebenen Anzahl abgefragt wird; vielmehr ist es Ziel des Verfahrens, dies im Mittel vorzusehen. Die Anzahl der Abfragen je Individuum und je Ermittlungszeitraum ist somit als relativ selten einzustufen. Damit unterscheidet sich das hier vorgeschlagene Verfahren von solchen Verfahren, bei denen jedes Individuum konstant und allumfassend getrackt wird, was regelmäßig Bedenken mit Blick auf den Datenschutz auslöst.

Bevorzugt wird die Subpersonenmenge bei jeder Abfrage neu zufällig gebildet, wenngleich ein bestimmtes und begründbares und bezogen auf die Gesamtpersonenmenge überschaubares Eingreifen und etwa Ausschließen von bestimmten Individuen aus der Abfrage denkbar ist, etwa wenn erkannt wird, dass die seitens des Individuums bereitgestellte verkehrsmittelaufgelöste Streckennutzung regelmäßig fehlerhaft oder irreführend, etwa durch aktive Manipulation durch das Individuum, ist.

Insbesondere ist bevorzugt vorgesehen, dass die Subpersonenmenge zufällig aus der Personenmenge derart bestimmt wird, dass für jeden Subermittlungszeitraum innerhalb eines Ermittlungszeitraums gleich viele Individuen ausgewählt werden. Hierdurch wird die Berechnung im Schritt des Hochrechnens zum Abschluss des Ermittlungszeitraums insgesamt vereinfacht. Zudem wird die Güte des Ergebnisses des Verfahrens insgesamt erhöht.

Bevorzugt ist vorgesehen, dass die Menge der abgefragten Individuen nach mehreren Abfragen bezüglich einer oder mehrerer bestimmter Charakteristika dieser Individuen in Gruppen eingeteilt werden. Die Charakteristika können Individuen-spezifisch (etwa Alter, Geschlecht, Wohnort) und/oder verkehrsmittelbezogen (etwa in welchem geographischen Bereich wurde ein bestimmtes Verkehrsmittel genutzt) sein. Ist innerhalb einer Gruppe ein ausreichend homogenes verkehrsmittel- und streckenbezogenes Nutzungsverhalten feststellbar (etwa entsprechend einer Normalverteilung), ist vorgesehen, Individuen, die das Charakteristikum bzw. die Charakteristika aufweisen, wie diese Gruppe, bei zukünftigen Abfragen zahlenmäßig weniger abzufragen oder innerhalb des Verfahrens weiterzubearbeiten; sie sind in der ausgewählten Subpersonenmenge dann unterrepräsentiert. Diese zahlenmäßige Unterrepräsentation wird im weiteren Verfahren, etwa im Hochrechnungsschritt, entsprechend berücksichtigt. Man geht bei dieser Ausgestaltung des Verfahrens davon aus, dass das Nutzungsverhalten von Individuen mit bestimmten Charakteristika gleich ist.

Die verkehrsmittelaufgelöste Streckennutzung eines einzelnen Individuums erfolgt sensorgestützt und grenzt sich hierdurch von einer manuellen, stichprobenartigen Befragung ab.

Das zentrale Abfragen der verkehrsmittelaufgelösten Streckennutzung erfolgt über eine entsprechende Netzwerk-Infrastruktur. Üblicherweise sind einzelne Netzwerk-Teilnehmer, die den einzelnen Individuen zugeordnet sind, etwa Smartphones, in einem Netzwerk oder an einem Server angemeldet, sodass eine zentrale Recheneinheit, etwa der Server, diese Einheiten softwaretechnisch auffordern kann, die verkehrsmittelaufgelöste Streckennutzung des Individuums für den vorgegebenen Subermittlungszeitraum an den Server zu übermitteln.

Üblicherweise werden in dem Ermittlungszeitraum die Subermittlungszeiträume gleichmäßig verteilt definiert und entsprechend abgefragt. Bevorzugt ist vorgesehen, die zentrale Abfrage zeitlich äquidistant durchzuführen. Weiter bevorzugt ist es, wenn die Abfragen so angelegt sind, dass innerhalb des Ermittlungszeitraums im Wesentlichen durchgängig Daten vorliegen, das bedeutet, dass die jeweiligen Subermittlungszeiträume aneinandergrenzen. So können die Abfragen etwa immer nach Abschluss des Subermittlungszeitraumes durchgeführt werden. Ist der Subermittlungszeitraum etwa täglich, wird jeden Tag eine Abfrage durchgeführt. Hierdurch ergibt sich ein durchgängiges Nutzungsbild.

In einem Folgeschritt wird die zentral abgefragte verkehrsmittelaufgelöste Streckennutzung gespeichert. Dies erfolgt üblicherweise auf der zentralen Recheneinheit respektive auf einem der zentralen Recheneinheit zugeordneten Speicher. Es besteht die Möglichkeit, jedes einzelne Abfrageergebnis der zentralen Abfrage individuell zu speichern, sodass für jedes abgefragte Individuum ein Datensatz gespeichert ist.

In einer vereinfachten Speichermethode kann dagegen vorgesehen sein, dass die zentral abgefragten Daten von den einzelnen Individuen ausgewertet und bei identischer Nutzung bezogen auf Strecke und Verkehrsmittel diese Datensätze zusammengefasst werden und ein solcher zusammengefasster Datensatz die Information der Anzahl der gleichen Datensätze enthält. Eine solche Zusammenfassung von gleichen Datensätzen kann nicht nur innerhalb eines Subermittlungszeitraumes, sondern auch über den gesamten Ermittlungszeitraum erfolgen und verringert damit das Datenvolumen.

**In** einem weiteren Schritt, der üblicherweise am Ende des Ermittlungszeitraums durchgeführt wird, wird auf Basis der gespeicherten verkehrsmittelaufgelösten Streckennutzung die wahrscheinliche Verkehrsmittelnutzung der gesamten Personenmenge hochgerechnet. **In** diese Hochrechnung fließen üblicherweise die Anzahl der Individuen der Personenmenge und die Anzahl der Individuen der jeweiligen Subpersonenmengen ein, insbesondere, wenn eine absolute Anzahl an Personen, die ein bestimmtes Verkehrsmittel für eine bestimmte Strecke genutzt hat, von Interesse ist.

Gleichwohl kann auch eine relative Hochrechnung ausreichend sein, in der die gespeicherten verkehrsmittelaufgelösten Streckennutzungsdaten in ein Verhältnis zueinander gesetzt und hochgerechnet werden.

Grundsätzlich geht man bei der Hochrechnung davon aus, dass die stichprobenartige, zeitlich verteilte Abfrage der verkehrsmittelaufgelösten Streckennutzung für einen bestimmten Subermittlungszeitraum von Individuen einer bestimmten Subpersonenmenge sich gleich zu der Gesamtheit der Personenmenge verhält. Hiervon ist im Regelfall auszugehen, wenn die überwachte Personenmenge und die Subpersonenmenge jeweils ausreichend groß und in einem sinnvollen Verhältnis zueinander stehen. Durch die zufällige Auswahl der Individuen zur Bildung der Subpersonenmenge aus der Personenmenge kann man von einer ausreichenden Repräsentativität ausgehen. Es versteht sich, dass die Hochrechnung eine umso bessere Abbildung der Realität ist, desto besser die Subpersonenmenge die Gesamtheit der Personenmenge repräsentiert.

Die Personenmenge ist üblicherweise größer als 100.000 Individuen, bevorzugt größer als eine Million.

**In** einem letzten Schritt wird mindestens eine verkehrsmittel- und streckenaufgelöste Einheit entsprechend der hochgerechneten, personenmengenbezogenen Nutzung der Verkehrsmittel ausgegeben. Diese Einheit kann auch als Messgröße bzw. Leistungseinheit angesprochen werden. Diese Einheit korreliert mit der Personenbeförderungsmenge bzw. Personenbeförderungsleistung. Anhand dieser Einheit kann eine Verteilung des Gesamterlöses, der durch einen Tarifverbund erwirtschaftet wurde, erfolgen.

Bevorzugt ist in diesem Zusammenhang vorgesehen, dass die verkehrsmittel- und streckenaufgelöste Einheit proportional zu der Anzahl an Individuen ist, von der ausgegangen wird, dass sie im Ermittlungszeitraum die Verkehrsmittel entsprechend genutzt haben. Hierdurch wird eine einfache und nachvollziehbare Schnittstelle zu dem erfinderischen Verfahren für nachgelagerte Schritte gegeben.

Bevorzugt ist vorgesehen, dass zur Ermittlung der verkehrsmittelaufgelösten Streckennutzung jedes Individuum während der Nutzung des Verkehrsmittels ein mobiles Endgerät mit sich führt, welches mobile Endgerät mittels Sensoren Rohdaten zur Ermittlung der verkehrsmittelaufgelösten Streckennutzung für den Subermittlungszeitraum aufzeichnet.

Die Aufzeichnung erfolgt üblicherweise kontinuierlich, sodass für den Fall, dass das spezifische mobile Endgerät im Rahmen der zentralen Abfrage die Daten für einen Subermittlungszeitraum übermitteln soll, entsprechende Daten zur Verfügung stellen kann. Es kann auch vorgesehen sein, dass die Daten nicht kontinuierlich aufgezeichnet werden, sondern zu Beginn eines Subermittlungszeitraums ein entsprechendes, üblicherweise zentrales Signal an das mobile Endgerät versandt wird, woraufhin die Aufzeichnung der Daten beginnt. Am Ende des Subzeitraums werden diese Daten dann im Rahmen der zentralen Abfrage übermittelt. Bevorzugt ist vorgesehen, dass anschließend jedenfalls die App-bezogenen Daten im Speicher des mobilen Endgerätes gelöscht werden. Dies schont erhebliche Ressourcen über den Ermittlungszeitraum gesehen für das einzelne mobile Endgerät.

Ein mobiles Endgerät kann etwa ein Smartphone sein. Ein Smartphone verfügt üblicherweise ohnehin über die notwendigen Sensoren zur Generierung von sogenannten Bewegungsdaten, die abbilden, entlang welches Weges das mobile Endgerät - und damit üblicherweise auch der Besitzer, mithin das jeweilige Individuum - sich fortbewegt hat. Auch kann das Smartphone über Sensoren für eine ggf. separate Verkehrsmittelerkennung verfügen.

In einer Weiterbildung ist vorgesehen, dass die durch das mobile Endgerät aufgezeichneten Rohdaten auf dem mobilen Endgerät in eine Verkehrsmittelnutzung und/oder in eine Streckennutzung überführt werden. Das mobile Endgerät fungiert dann als dezentrale Recheneinheit, die die Rohdaten bereits in abstraktere Verkehrsmittelnutzungsdaten und/oder in Streckennutzungsdaten überführt. Solche abstrahierten Daten sind in ihrem Volumen wesentlich kleiner als die sämtliche relevanten Bewegungen und Signale umfassenden Rohdaten des Inputs. Auch kann hier bereits eine Filterung von Daten erfolgen, die nicht für eine für die Ermittlung einer verkehrsmittelaufgelösten Streckennutzung notwendig sind, sodass Informationen zu dem exakten Aufenthaltsort des Individuums außerhalb von für das Verfahren relevanten Verkehrsmitteln nicht im Rahmen der zentralen Abfrage übertragen werden.

Zur Ermittlung des genutzten Verkehrsmittels für ein Individuum können durch das mobile Endgerät bereitgestellte Bewegungsdaten, die dem Individuum zugeordnet sind, genutzt werden. Bewegungsdaten sind aus den durch ein mobiles Endgerät ermittelten Rohdaten bereits ausgewertete Daten, die den zurückgelegten Weg des mobilen Endgerätes wiedergeben. Sie stellen einen zusammenhängenden Pfad dar, ggf. versehen mit einer ermittelten Genauigkeit. Es ist nicht unüblich, dass seitens eines mobilen Endgerätes, etwa eines Smartphones, mehrere Sensoren genutzt werden, um den aktuellen Standort zu bestimmen und aufzuzeichnen, wobei die Vielzahl der Sensoren in vielen Fällen gleichlautende Ergebnisse liefern und sich daher ergänzen. Einfluss haben können etwa GPS-Sensoren, Mobilfunknetz-Daten, Magnetfeld-Sensoren (Kompassdaten) und/oder Beschleunigungssensoren. Gleichzeitig können bei einer Abnahme der Genauigkeit eines Sensors, etwa des GPS-Sensors, andere Sensoren, etwa Mobilfunknetz-Daten-Sensoren, eine höhere Genauigkeit für den Aufenthaltsort liefern.

Aus den Bewegungsdaten kann bereits in vielen Fällen eine Aussage darüber getroffen werden, welches Verkehrsmittel genutzt worden ist. Zur Stützung können zusätzlich aktuelle externe Daten herangezogen werden, die den Zeitpunkt der Abfahrt und der Ankunft von bestimmten Verkehrsmitteln beinhalten (etwa Fahrpläne), mit denen im Rahmen einer Prüfung der Übereinstimmung zusätzliche Validierungsankerpunkte definiert werden können.

Alternativ oder ergänzend kann die Ermittlung des genutzten Verkehrsmittels für ein Individuum, respektive für ein mobiles Endgerät, auch endgeräteseitig sensorbasiert erfolgen, und zwar in Abhängigkeit von zumindest einem bestimmten verkehrsmittelspezifischen Charakteristikum. Verkehrsmittelspezifische Charakteristika lassen sich in passive und aktive Charakteristika unterteilen: Bei passiven Charakteristika handelt es sich um solche, die das mobile Endgerät selbsttätig erkennt. Hierzu zählt etwa das Beschleunigungsverhalten eines Verkehrsmittels, welches durch einen endgeräteseitigen Beschleunigungssensor ermittelt werden kann. Bei aktiven Charakteristika handelt es sich um solche, die das Verkehrsmittel selbst aktiv zu seiner eigenen Erkennung zur Verfügung stellt, etwa in dem es selbst an alle beförderten Personen, respektive mobile Endgeräte ein Signal, üblicherweise ein Funksignal, aussendet. Dies können etwa eine aktive IoT-Umgebung (Internet of Things) oder offene Bluetooth- oder Wifi-Beacons im Verkehrsmittel sein.

Zur Ermittlung der Streckennutzung für ein Individuum können ebenfalls die sensorbasierten, dem Individuum zugeordnete Bewegungsdaten herangezogen werden. Aus dem zur Verfügung gestellten Pfad kann die Streckennutzung problemlos abgeleitet werden.

Im Ergebnis lässt sich somit eine verkehrsmittelaufgelöste Streckennutzung eines Individuums ermitteln.

In einer bevorzugten Ausgestaltung ist vorgesehen, dass die individuelle verkehrsmittelaufgelöste Streckennutzung unter Zugrundelegung der Rohdaten und/oder plausibilisierenden externen Daten, wie etwa Fahrplandaten, bewertet und mit einer Vertrauensgüte versehen wird, die angibt, mit welcher Sicherheit die angegebene verkehrsmittelaufgelöste Streckennutzung der Realität entspricht. Üblicherweise erfolgt dies im Rahmen eines Post-Processings. Einfluss hierauf hat üblicherweise auch die durch das mobile Endgerät den Rohdaten zugeordnete Genauigkeit, da diese mit einer Aussagesicherheit korreliert. Externe Daten wie Fahrplandaten können die Vertrauensgüte insbesondere in Fällen von ungenauen Daten zur Verkehrsmittelnutzung erhöhen. Die daraus resultierende Vertrauensgüte kann der verkehrsmittelaufgelösten Streckennutzung insgesamt zugeordnet werden. Bevorzugt ist es jedoch, wenn für die Verkehrsmittelnutzung und die Streckennutzung getrennte Vertrauensgüten bereitgestellt werden. In einigen Fällen ist für die Gesamtgüte des Verfahrens zwar eine hohe Genauigkeit des genutzten Verkehrsmittels notwendig, wohingegen eine exakte Ermittlung der Streckennutzung nur sekundär ist. Zwar werden in diesem Fall mehr Daten, nämlich die Vertrauensgüte für die Verkehrsmittelnutzung und die Vertrauensgüte für die Streckennutzung, gespeichert, im Ergebnis kann die notwendige Rechenleistung jedenfalls in der Hochrechnung jedoch reduziert werden.

Durch das Bestimmen einer Vertrauensgüte kann im Rahmen der Hochrechnung ein entsprechender Datensatz gewichtet bewertet werden. So können Datensätze, die nur eine geringe Vertrauensgüte aufweisen, mit einer geringeren Gewichtung versehen werden als solche, die eine hohe Vertrauensgüte aufweisen.

Das Post-Processing hat die Funktion, eine möglichst hohe und optimale Güte der erhobenen Daten zu gewährleisten. Die Güte der Ergebnisse der einzelnen Datensätze hängt dabei primär von folgenden Faktoren ab:
- Die Qualität der Eingangsdaten (z.B. sehr guter bzw. schlechter GPS-Empfang oder hohe Dichte von GSM-Stationen bzw. Funklöcher) und
- die Eindeutigkeit der möglichen Ergebnisalternativen (hohe oder geringe Anzahl von parallel verlaufenden ÖV-Linien bzw. Anzahl der Verkehrsmittel-Alternativen).

Der stochastische Ansatz mit Gütemaßen erhöht die Ergebnisqualität deutlich, da alle Einzelwerte mit Mittelwert und Streuung berücksichtigt werden können und auch das Gesamtergebnis ein Genauigkeitsmaß erhält. Durch die Erhöhung der Stichprobenanzahl kann die zu erwartende Güte direkt beeinflusst werden und die erforderliche Anzahl der angefragten Individuen minimiert werden. Die Höhe der Stichproben orientiert sich dabei direkt an den gegebenen Rahmenbedingungen, die für die Ergebnisgüte maßgebend sind.

Die Vertrauensgüte kann anhand
- der Berücksichtigung von verkehrsmittelspezifischen Parametern und Merkmalen,
- Einbeziehung weiterer Infrastrukturdaten, und/oder
- Berechnung stochastischer Korrelationen zwischen Infrastrukturdaten und mobilen Daten
erfolgen.

Hierbei werden üblicherweise auch die Rohdaten mitverarbeitet. Für eine hohe Vertrauensgüte kann etwa vorgesehen sein, dass die Genauigkeit eines bestimmten Sensorsystems besonders hoch ist (etwa bei GPS-Anwendungen) oder dadurch, dass verschiedene Sensoren bzw. externe Daten zu übereinstimmenden Aussagen führen.

Verkehrsmittelspezifische Parameter und Merkmale sind solche, die auch auf die Nutzung eines bestimmten Verkehrsmittels hinweisen, unabhängig von dem zurückgelegten Weg, etwa die bereits oben beschriebenen aktiven und passiven Merkmale eines Verkehrsmittels. Zusätzlich können bestimmte Wartezeiten und andere Erfahrungswerte, durchaus auch zeitaufgelöst, hinzugezogen werden.

Bei der Einbeziehung weiterer Infrastrukturdaten handelt es sich um Haltestellenkoordinaten, Fahrplandaten, Schienen- und Linienverläufe, die mit den Bewegungsdaten und/oder den ggf. verkehrsaufgelösten Streckennutzungsdaten in Übereinstimmung gebracht werden können.

In bestimmten geografischen Regionen ist ein bestimmtes Verhalten von Sensoren zu erwarten. So kann etwa in Häuserschluchten die GPS-basierte Ortung versagen, während eine Ortung mittels Mobilfunkmasten relativ genau sein kann. Auch solche Aspekte können stochastisch in Korrelation gebracht werden.

Grundsätzlich besteht die Möglichkeit, dass die Bewertung der Daten und das Versehen mit einer Vertrauensgüte auf Seiten des mobilen Endgerätes erfolgt. Dann kann in einer bevorzugten Weiterbildung bereits ein Ausschluss von bestimmten Wegen bei der Übermittlung der zentral abgefragten verkehrsmittelaufgelösten Streckennutzung erfolgen, sollte die Vertrauensgüte bestimmten Anforderungen, etwa ein bestimmtes Maß, nicht genügen.

Bevorzugt ist jedoch vorgesehen, dass die Bewertung der Daten und das Versehen mit einer Vertrauensgüte auf einer zentralen Recheneinheit erfolgt. Die Bewertung und das Versehen mit einer Vertrauensgüte erfolgt dann im Rahmen eines Post-Processing. Dies ist vorteilhaft, da die Bewertung und das Versehen mit einer Vertrauensgüte üblicherweise einen erhöhten Rechenaufwand benötigt, der auf mobilen Endgeräten üblicherweise nicht zur Verfügung steht. Zudem werden dann alle abgefragten Daten mit einheitlichen externen Daten abgeglichen, sodass ein einheitliches Ergebnis erzielbar ist. In diesem Fall kann es vorteilhaft sein, wenn im Rahmen der Abfrage auch die Rohdaten bzw. ein Teil der Rohdaten übertragen werden. Auch ist denkbar, dass nur für solche Wegabschnitte Rohdaten seitens des mobilen Endgerätes übertragen werden, für die nur eine geringe Genauigkeit bzw. Vertrauensgüte endgeräteseitig (vor)ermittelt wurde.

In einer bevorzugten Ausgestaltung ist vorgesehen, dass jedes Individuum in der Personenmenge innerhalb des erfindungsgemäßen Verfahrens jedenfalls bis zur Hochrechnung eindeutig identifizierbar ist und hierzu jedem Individuum eine eigene eindeutige ID zugeordnet ist. Diese ID maskiert jedoch das reale Individuum; eine bekannte Konnexität zwischen ID und realem Individuum besteht dann nicht.

Üblicherweise wird beim Abfragen von Daten von einem mobilen Endgerät, insbesondere von einem Smartphone, auch eine sogenannte Endgeräte-Kennung mit übermittelt. Diese erlaubt ein Tracking des jeweiligen Smartphonebesitzers. Erfindungsgemäß ist dagegen vorgesehen, diese Smartphone-Kennung gerade nicht im Laufe des Verfahrens und insbesondere mit Blick auf die Daten zur verkehrsmittelaufgelösten Streckennutzung zu speichern. Hierdurch kann trotz der Erhebung von spezifischen und Individuum-abhängigen Daten der Datenschutz für den einzelnen realen Nutzer gewährleistet werden.

Bevorzugt ist vorgesehen, dass zu einem Individuum ein reales, generisches Individuen-spezifisches Charakteristikum bekannt ist. Dieses Charakteristikum ist der jeweiligen **ID** des Individuums zugeordnet und kann bevorzugt in der ID-Kennung enthalten sein. Dies kann ein derzeitiger, generischer Status des Individuums sein, etwa eine Alterskategorie oder bestimmte Lebensumstände (Schüler, Student, Arbeitspendler, Senior). Auch können bestimmte gebuchte Qualitäten erfasst sein, wobei sich die Qualitäten in der erlaubten Art und Weise der Nutzung eines Verkehrsmittels widerspiegeln. Als Beispiel kann als Qualitätsmerkmal eine erste und zweite Klasse unterschieden werden.

Diejenigen Individuen der Personenmenge, die ein gemeinsames Individuen-spezifisches Charakteristikum aufweisen, werden als Individuen-Gruppe angesprochen. Wird während der Ausführung des Verfahrens, etwa im Abfrageschritt oder im Hochrechnungsschritt, erkannt, dass eine bestimmte Individuum-Gruppe die Verkehrsmittel nur in einem geringen Ausmaß nutzt, kann vorgesehen sein, dass die Individuen dieser Individuum-Gruppe häufiger abgefragt werden. Diese Gewichtung wird im Hochrechnungsschritt berücksichtigt. Eine geringe Nutzung liegt dann vor, wenn stochastisch eine Unterrepräsentation vorliegt. Ziel dieses geschichteten Stichprobendesigns ist es, eine hohe Vertrauensgüte für das Endergebnis zu erzielen. Sind aus einer Individuen-Gruppe nur selten verarbeitbare Abfragen vorhanden, fallen Ausreißer mehr ins Gewicht. Durch die häufigere Abfrage der Individuen der fraglichen Individuen-Gruppe wird diesem Problem begegnet. Gleichzeitig werden Individuum-Gruppen, von denen ausreichend Daten vorliegen, nicht übermäßig stark abgefragt, was dem notwendigen Abfrageaufkommen und der damit einhergehenden Verarbeitung zu Gute kommt.

In einer entsprechenden Weiterbildung kann vorgesehen sein, dass zu jedem Individuum in der Personenmenge zusätzlich unabhängig von der Ermittlung der verkehrsmittelaufgelösten Streckennutzung eine Regionsangabe bekannt ist und bei der Zusammenstellung der Individuen zur Bildung der Subpersonenmenge eine zahlenmäßige Gewichtung nach dieser Regionsangabe erfolgt. Diese Gewichtung wird in der Hochrechnung berücksichtigt. Die Regionsangabe wird nicht aus den Bewegungsdaten des jeweiligen Individuums ermittelt, sondern aus Paralleldaten. Dies kann etwa die Postleitzahl des jeweiligen Nutzers sein, in dem der Nutzer seinen Hauptwohnsitz hat. Solche generischen Daten lassen keinen Rückschluss auf die reale Person zu, können jedoch hilfreich zur Wahrung einer gewünschten Gleichverteilung sein. Darüber hinaus können zur Erhöhung der Güte der Aussage des Gesamtverfahrens Individuen mit solchen regionsspezifischen Charakteristika, die darauf vermuten lassen, dass nur eine geringe Vertrauensgüte der Verkehrsmittelnutzung und/oder der Streckennutzung zu erwarten ist, häufiger abgefragt werden. Hierdurch kann proaktiv die Güte des gesamten Verfahrens erhöht werden.

Um den Datenaufwand zu verringern, kann vorgesehen sein, die Verteilung der Individuen, die ein bestimmtes oder eine bestimmte Gruppe von Verkehrsmitteln, etwa öffentliche Verkehrsmittel, in einem bestimmten geographischen Raum nutzen, in das Verfahren einfließen zu lassen: Man kann davon ausgehen, dass die mengenmäßige Nutzung von Verkehrsmitteln von verschiedenen Angebotsumständen abhängt, etwa dem zeitlichen Angebot, der notwendigen Reisezeit, die Stärke der Auswirkung von unvorhergesehenen Ereignissen, regelmäßig resultierend in Verspätungen, etc. Üblicherweise sind Aspekte, die in die Verkehrsmittelqualität positiv einfließen: hohe Pünktlichkeit und/oder geringe Ausfallhäufigkeit und/oder ein Geschwindigkeitsvorteil gegenüber parallelen Verkehrsmitteln und/oder hohe Sauberkeit. Diese rein verkehrsmittelbezogenen Aspekte in Abgrenzung zu Individuen-spezifischen Charakteristika können durch eine Verkehrsmittelqualität abgebildet werden. Diese Verkehrsmittelqualität kann aus Paralleldaten, wie Fahrplänen, Verspätungsmeldungen, etc. abgeleitet werden. Dann bewirkt eine hohe Verkehrsmittelqualität in einem bestimmten geographischen Raum für ein Verkehrsmittel eine mengenmäßig regelmäßige und hohe Nutzung des Verkehrsmittels, eine niedrige Verkehrsmittelqualität dagegen eine mengenmäßig niedrigere bzw. unregelmäßigere.

Vor diesem Hintergrund ist bevorzugt vorgesehen die Daten von Individuen, die ein oder eine Gruppe von Verkehrsmitteln mit einer hohen Verkehrsmittelqualität nutzen, mengenmäßig weniger häufig weiterverarbeitet werden, das bedeutet: zu diesen beispielsweise nicht die verkehrsmittelaufgelöste Streckennutzung zu berechnen (wenn dies beispielsweise auf der zentralen Recheneinheit erfolgt) oder diese Daten im Speicherschritt nicht zu speichern, als die Daten von Individuen, die ein oder eine Gruppe von Verkehrsmitteln mit einer niedrigen Verkehrsmittelqualität nutzen. Die Ermittlung, ob sich ein Individuum in einem geographischen Raum mit einer hohen Verkehrsmittelgüte bewegt hat oder nicht ist wesentlich einfacher, da hier nur eine ungefähre Ortsangabe der Nutzung benötigt wird und nicht eine exakte Auswertung der verkehrsmittelaufgelösten Streckennutzung. Diese mengenmäßige Anpassung wird im Hochrechnungsschritt entsprechend berücksichtigt.

Vorteilhafterweise müssen durch diesen Ansatz bei gleichbleibender oder besserer Güte des Ergebnisses weniger Daten verarbeitet werden, als bei einer willkürlichen Verteilung. Ein weiterer Vorteil ist, dass eine Kenntnis über Individuen-spezifische Charakteristika nicht notwendig ists. Damit können die teilnehmenden Individuen bezüglich ihrer persönlichen Charakteristika vollständig anonym verbleiben.

Es kann vorgesehen sein, dass die Personenmenge eine Teilmenge einer größeren Nutzermenge ist, wobei die Personenmenge aus Individuen zusammengesetzt ist, die ein gemeinsames Charakteristikum aufweisen. Ein solches gemeinsames Charakteristikum kann die Nutzung eines bestimmten Tickets bzw. eines bestimmten Angebotes sein. So kann auch angebotsübergreifend ein einheitliches Ermittlungsverfahren der Nutzung von verschiedenen Verkehrsmitteln bereitgestellt werden, welches nach den gleichen Grundsätzen und bevorzugt nach identischen Regeln ausgewertet wird. Hierdurch wird eine Vergleichbarkeit der einzelnen Ergebnisse für die einzelnen Personenmengen als Teilmengen der Nutzermenge ermöglicht. Neben der verkehrsmittelaufgelösten Streckennutzung kann vorgesehen sein, die Nutzung der Verkehrsmittel nach weiteren Kriterien aufzulösen. So kann vorgesehen sein, zusätzlich eine klassifizierte zeitliche Auflösung bereitzustellen. Die Klassifikation der zeitlichen Auflösung richtet sich nach üblichen Rhythmen, die der üblichen Nutzung der Verkehrsmittel entspricht. Eine Klassifikation für die zeitliche Auflösung kann etwa auf Halbstunden- oder Vollstundenbasis erfolgen. Es ist dann eine Aussage möglich, wie die Nutzung über den Tagesverlauf verteilt ist. Als weitere oder auch ergänzende Klassifikation der zeitlichen Auflösung kann eine Wochentagsauflösung dienen. So kann bevorzugt über die Woche verteilt eine Nutzung zeitlich aufgelöst angegeben werden, sodass Stoßzeiten zu Arbeitstagen getrennt betrachtet zu einer Wochenendnutzung abgeschätzt werden kann. In einer weiteren Ausgestaltung, die auch ergänzend zu der Vorgenannten denkbar ist, kann die Nutzung qualitätsaufgelöst erfolgen. Eine Qualitätsauflösung erfolgt etwa bezüglich der Nutzung von bestimmten qualitativ höherwertigen Verkehrsmitteln, der Nutzung von bestimmten Teilen eines Verkehrsmittels (beispielsweise für einen Zug: Erste Klasse und zweite Klasse), etc. Zumindest eine Teilmenge der genutzten Verkehrsmittel stellt hierfür zumindest zwei verschiedene Qualitäten der Beförderung zur Verfügung, aus denen der Nutzer wählen kann.

Ein System zur Ausführung des Verfahrens ist bevorzugt als Netzwerk ausgestaltet. Die einzelnen mobilen Endgeräte sind an einer zentralen Recheneinheit angemeldet bzw. mit dieser über übliche Kommunikationswege verbunden. Die zentrale Recheneinheit fragt die verkehrsaufgelöste Streckennutzung und ggf. die Rohdaten von zufällig ausgewählten mobilen Endgeräten ab, speichert diese und rechnet die Nutzung der Verkehrsmittel entsprechend hoch. Dem Fachmann ist bewusst, dass vorgesehen sein kann, dass die Daten entweder direkt von den mobilen Endgeräten abgefragt werden oder die Abfrage über eine dazwischen eingeschaltete zentrale Recheneinheit erfolgt, die über sämtlich Daten verfügt und hiervon durch die Abfrage nur ein Teil der Daten im Rahmen des weiteren Verfahrens verarbeitet wird. Zur Abfrage und zur Hochrechnung verfügt die zentrale Recheneinheit über eine Nutzerdatenbank, in der sämtliche Nutzer des Systems gelistet sind.

Ist ein zentrales Post-Processing vorgesehen, erfolgt auch dieses bevorzugt auf der zentralen Recheneinheit.

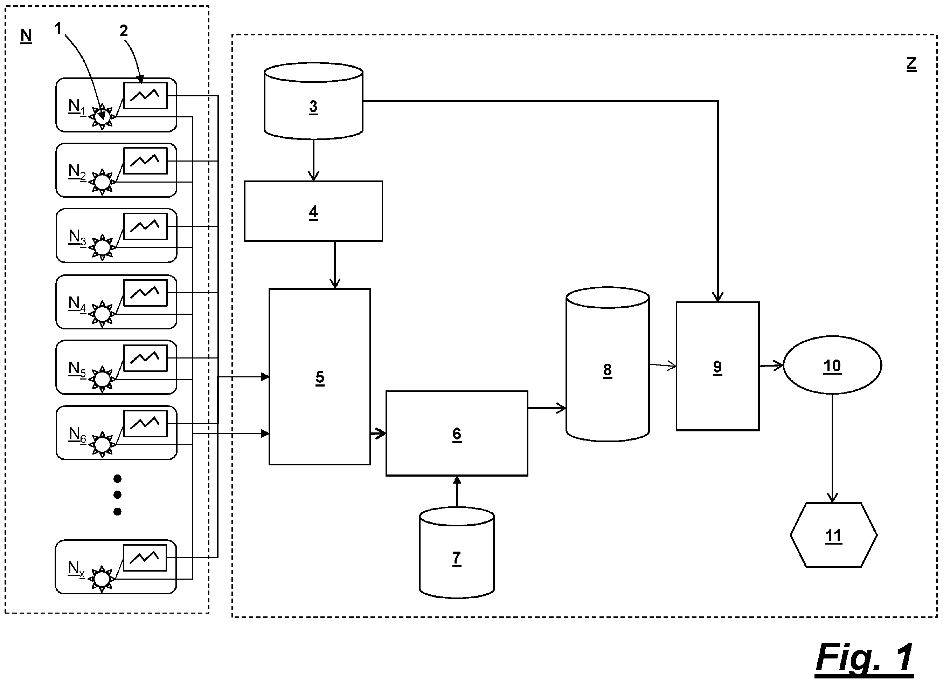

Die Erfindung wird anhand der beiliegenden Figur näher erläutert. Die einzige Figur zeigt ein Ablaufschema des erfindungsgemäßen Verfahrens.

Nutzer N einer Vielzahl von Verkehrsmitteln, hier Verkehrsmittel des öffentlichen Nahverkehrs, sind im Besitz von Smartphones N₁ bis Nₓ. Jedes Smartphone verfügt über einen Sensorsatz 1 und eine Auswerteeinheit 2. Der Sensorsatz 1 zeichnet kontinuierlich Rohdaten des jeweiligen Smartphones N₁ bis Nₓ auf. Aus diesen Rohdaten werden in der Auswerteeinheit 2 Bewegungsdaten sowie hieraus verkehrsmittelaufgelöste Streckennutzungsdaten generiert.

Bereitgestellt ist zudem eine zentrale Recheneinheit Z. Die Smartphones N₁ bis Nₓ sind mit der zentralen Recheneinheit Z verbunden, sodass die zentrale Recheneinheit Z Signale an die Smartphones N₁ bis Nₓ senden kann und die Smartphones N₁ bis Nₓ Daten an die zentrale Recheneinheit Z zurücksenden können. Die zentrale Recheneinheit Z und die Smartphones N₁ bis Nₓ sind in einer Netzwerk-Infrastruktur organisiert.

Nachstehend werden die einzelnen Komponenten der zentralen Recheneinheit Z beschrieben. Es versteht sich, dass die einzelnen Komponenten nicht zwingend örtlich an oder in der zentralen Recheneinheit platziert sein müssen. Vielmehr ist der Aufbau Soft- und Hardware-architektonisch zu verstehen.

In einer Nutzerdatenbank 3 sind alle Nutzer N, die an dem erfindungsgemäßen Verfahren teilnehmen, registriert. Jedem Nutzer N ist eine eindeutige, interne Identifikationsnummer (kurz ID) zugeordnet. Jeder Nutzer N wird im Nachstehenden als Individuum angesprochen. Sämtliche Nutzer N in der Nutzerdatenbank 3 bilden eine Subpersonenmenge.

Ziel ist es, die verkehrsmittelaufgelöste Streckennutzung einer bestimmten Subpersonenmenge für einen bestimmten Subermittlungszeitraum abzufragen. Bei dem Subermittlungszeitraum handelt es sich nur um einen Bruchteil des gesamten Ermittlungszeitraums, etwa 24 Stunden. Die verkehrsmittelaufgelöste Streckennutzung wird für den abgefragten Nutzer für den gesamten Subermittlungszeitraum ermittelt. Das bedeutet: Es werden die Daten für 24 Stunden eines Nutzers in einer zentralen Abfrage abgefragt.

In einem Auswahlgenerator 4 wird eine Subpersonenmenge der in der Nutzerdatenbank 3 gehaltenen Personenmenge ausgewählt. Dies können etwa 5 bis 10 % der Personenmenge sein. Die Grundlage für die Auswahl der Individuen aus der Personenmenge ist grundsätzlich eine bestimmte Anzahl pro Subermittlungszeitraum. Gegebenenfalls kann eine Auswahl gewichtet sein mit Blick auf regionsspezifische Charakteristika einzelner Individuen. Grundsätzlich erfolgt die Auswahl zufällig.

Das Ergebnis des Auswahlgenerators 4 wird an ein Abfragemodul 5 weitergeleitet. Dieses fragt Daten von den Smartphones N₁, N₂ und N₃ entsprechend der Auswahl des Auswahlgenerators 4 ab. Das bedeutet: Es wird nur ein Bruchteil der gesamten, in dem Netzwerk angemeldeten Smartphonemenge abgefragt (nämlich hier beispielsweise die Smartphones N₁, N₂, N₃) und nicht sämtliche.

In dem Abfragemodul 5 werden die bereits in den Smartphones N₁, N₂, N₃ ermittelten verkehrsmittelaufgelösten Streckennutzungsdaten und/oder Bewegungsdaten aus den smartphoneseitigen Auswertemodulen 2 abgefragt und gegebenenfalls zusätzlich Rohdaten aus dem Sensorsatz 1, üblicherweise diejenigen, die zu der smartphoneseitigen Auswertung geführt haben.

Die Rohdaten, wenn vorhanden, werden in einer zentralen Recheneinheit an ein Post-Processing 6 übermittelt, welches Post-Processing 6 unter Zugrundelegung unabhängiger externer Daten 7 selbst (ebenfalls) verkehrsmittelaufgelöste Streckennutzungsdaten generiert (und diese mit den smartphonebasierten ausgewerteten Daten und Ergebnissen vergleicht und gegebenenfalls abändert). In dem Post-Processing 6 werden diesen Daten auch Vertrauensgüten im Rahmen einer Bewertung der Daten zugewiesen, mit denen eine Aussage über die Validität der Daten getroffen werden kann.

Die so seitens der Smartphones bzw. im Rahmen des Post-Processing 6 ermittelten verkehrsmittelaufgelösten Streckennutzungsdaten werden in einer Datenbank 8 gespeichert.

Dieses Vorgehen wiederholt sich mehrmals während eines Ermittlungszeitraums, für den die verkehrsmittelaufgelöste Streckennutzung ermittelt werden soll, und zwar immer nach Ablauf des hier definierten Subermittlungszeitraums, somit immer nach 24 Stunden.

Nach Abschluss des Ermittlungszeitraums wird in einer Hochrechnung 9 das Verhalten der jeweiligen Stichproben auf die gesamte Personenmenge vorgenommen. Hieraus ergibt sich das Verhalten 10 aller Nutzer. Hieraus kann als Ergebnis 11 eine entsprechende verkehrsmittel- und streckenaufgelöste Einheit abgeleitet werden.

Die Erfindung ist anhand eines Ausführungsbeispiels erläutert worden. Ohne den Schutzbereich, beschrieben durch die geltenden Ansprüche, zu verlassen, ergeben sich für den Fachmann zahlreiche weitere Ausgestaltungen, den Erfindungsgedanken zu verwirklichen, ohne dass diese im Rahmen dieser Ausführungen näher erläutert werden müssten.

### Bezugszeichenliste

- N: Nutzer
- N₁...N_{X}: Smartphone
- Z: Zentrale Recheneinheit
- 1: Sensorsatz
- 2: Auswertemodul
- 3: Nutzerdatenbank
- 4: Auswahlgenerator
- 5: Abfragemodul
- 6: Post-Processing
- 7: externe Daten
- 8: Datenbank für verkehrsmittelaufgelöste Streckennutzungsdaten
- 9: Hochrechnung
- 10: Verhalten aller Nutzer
- 11: Ergebnis

## Patentansprüche

1. Verfahren zur Ermittlung der Verteilung der raumaufgelösten Nutzung von Verkehrsmitteln einer aus einer Vielzahl an Individuen bestehenden Personenmenge in einem Ermittlungszeitraum, umfassend die folgenden Schritte:
- Mehrmaliges und über den Ermittlungszeitraum verteiltes, automatisiertes, zentrales Abfragen einer sensorbasierten verkehrsmittelaufgelösten Streckennutzung für einen bestimmten Subermittlungszeitraum von Individuen einer bestimmten Subpersonenmenge, wobei die Subpersonenmenge als Teilmenge aus zufällig ausgewählten Individuen der Personenmenge gebildet wird und welcher Subermittlungszeitraum ein Bruchteil des Ermittlungszeitraums ist,
- Speichern der zentral abgefragten, verkehrsmittelaufgelösten Streckennutzung,
- Hochrechnen der wahrscheinlichen verkehrsmittelaufgelösten Streckennutzung der Personenmenge auf Basis der gespeicherten verkehrsmittelaufgelösten Streckennutzung für den gesamten Ermittlungszeitraum;
- Ausgabe einer verkehrsmittel- und streckenaufgelösten Einheit entsprechend der hochgerechneten personenmengenbezogenen Nutzung der Verkehrsmittel.

2. Verfahren nach Anspruch 1 **dadurch gekennzeichnet, dass** nach der Durchführung zumindest mehrerer Abfragen die abgefragten bezüglich einer oder mehrerer bestimmter Charakteristika dieser Individuen in Gruppen eingeteilt werden und wenn innerhalb dieser Gruppe ein homogenes Nutzungsverhalten der Verkehrsmittel feststellbar ist, Individuen, die das bzw. die Charakteristika aufweisen, wie diese Gruppe, bei zukünftigen Abfragen zahlenmäßig weniger abgefragt werden, wobei diese zahlenmäßige Unterrepräsentation im weiteren Verfahren, etwa im Hochrechnungsschritt, entsprechend berücksichtigt wird.

3. Verfahren nach einem der Ansprüche 1 oder 2 **dadurch gekennzeichnet, dass** zur Ermittlung der verkehrsmittelaufgelösten Streckennutzung jedes Individuum während der Nutzung des Verkehrsmittels ein mobiles Endgerät (N) mit sich führt, welches mobile Endgerät (N) mittels Sensoren (1) Rohdaten zur Ermittlung der verkehrsmittelaufgelösten Streckennutzung für den Subermittlungszeitraum aufzeichnet.

4. Verfahren nach Anspruch 3, **dadurch gekennzeichnet, dass** die Rohdaten auf dem mobilen Endgerät in eine Verkehrsmittelnutzung und/oder in eine Streckennutzung überführt werden.

5. Verfahren nach einem der Ansprüche 3 bis 4, **dadurch gekennzeichnet, dass** die Ermittlung des genutzten Verkehrsmittels für ein Individuum durch eine endgeräteseitige sensorbasierte Erkennung von zumindest einem bestimmten verkehrsmittelspezifischen Charakteristikum erfolgt.

6. Verfahren nach einem der Ansprüche 1 bis 5, **dadurch gekennzeichnet, dass** die individuelle verkehrsmittelaufgelöste Streckennutzung unter Zugrundelegung der Rohdaten und/oder plausibilisierenden externen Daten (7), wie etwa Fahrplandaten, bewertet und mit einer Vertrauensgüte versehen wird, die angibt, mit welcher Sicherheit die angegebene verkehrsmittelaufgelöste Streckennutzung der Realität entspricht.

7. Verfahren nach Anspruch 6, **dadurch gekennzeichnet, dass** die Bewertung und das Versehen mit einer Vertrauensgüte auf einer zentralen Recheneinheit (Z) erfolgt.

8. Verfahren nach einem der Ansprüche 1 bis 7, **dadurch gekennzeichnet, dass** jedes Individuum in der Personenmenge innerhalb des Verfahrens jedenfalls bis zur Hochrechnung eindeutig identifizierbar ist und hierzu jedem Individuum eine eigene, das reale Individuum jedoch maskierende, eindeutige ID zugeordnet ist.

9. Verfahren nach einem der Ansprüche 1 bis 8, **dadurch gekennzeichnet, dass** beim Speichern der ermittelten verkehrsmittelaufgelösten Streckennutzung die verkehrsmittelaufgelöste Streckennutzung mit einem realen, generischen, Individuen-spezifischen Charakteristikum gespeichert wird.

10. Verfahren nach Anspruch 9, **dadurch gekennzeichnet, dass** zumindest zwei Individuen-spezifische Charakteristika in der Personenmenge vorhanden sind und die Individuen gleicher Individuenspezifischer Charakteristika eine Individuum-Gruppe bilden, wobei für den Fall, dass erkannt wird, dass eine Individuum-Gruppe die Verkehrsmittel nur in geringem Ausmaß nutzt, die Individuen dieser Individuum-Gruppe häufiger abgefragt im Abfrageschritt werden und die daraus resultierende Gewichtung dieser Individuum-Gruppe in dem Hochrechnungsschritt berücksichtigt wird.

11. Verfahren nach einem der Ansprüche 9 oder 10, **dadurch gekennzeichnet, dass** zu jedem Individuum in der Personenmenge zusätzlich unabhängig von der Ermittlung der verkehrsmittelaufgelösten Streckennutzungsermittlung eine Regionsangabe bekannt ist und bei der Zusammenstellung der Individuen zur Bildung der Subpersonenmenge eine zahlenmäßige Gewichtung nach dieser Regionsangabe erfolgt und wobei diese Gewichtung in der Hochrechnung berücksichtigt wird.

12. Verfahren nach einem der Ansprüche 1 bis 11, **dadurch gekennzeichnet, dass** für verschiedene Verkehrsmittel eine Verkehrsmittelqualität gebildet wird und die Daten von Individuen, die ein oder eine Gruppe von Verkehrsmitteln mit einer hohen Verkehrsmittelqualität nutzen, mengenmäßig weniger häufig weiterverarbeitet werden, als die Daten von Individuen, die ein oder eine Gruppe von Verkehrsmitteln mit einer niedrigen Verkehrsmittelqualität nutzen.

13. Verfahren nach einem der Ansprüche 1 bis 12, **dadurch gekennzeichnet, dass** die Personenmenge eine Teilmenge einer größeren Nutzermenge ist, wobei die Personenmenge aus Individuen zusammengesetzt ist, die ein gemeinsames Charakteristikum aufweisen, welches Charakteristikum mit einer bestimmten Nutzungsweise des Verkehrsmittels korreliert.

14. Verfahren nach einem der Ansprüche 1 bis 13, **dadurch gekennzeichnet, dass** die verkehrsmittel- und streckenaufgelöste Einheit (11) proportional zu der Anzahl an Individuen ist, von der anhand einer auf der Personenmenge basierenden Hochrechnung (9) ausgegangen wird, dass sie die Strecke im Ermittlungszeitraum genutzt haben.

15. System zur Durchführung des Verfahrens nach einem der Ansprüche 1 bis 14, wobei eine zentrale Recheneinheit (Z), insbesondere ein Server, eine Vielzahl an mobilen Endgeräten sowie ein auf den mobilen Endgeräten installiertes Programm, insbesondere eine App, bereitgestellt ist, wobei die zentrale Recheneinheit (Z) dazu eingerichtet ist über das auf den mobilen Endgeräten installierte Programm mit der Vielzahl an mobilen Endgeräten zu kommunizieren, insbesondere Abfragen zu senden und Daten zu empfangen.
